# EUROPÄISCHE PATENTSCHRIFT

(11) **EP 3 565 743 B1**
(45) Veröffentlichungstag und Bekanntmachung des Hinweises auf die Patenterteilung: **14.07.2021**
(21) Anmeldenummer: 17847707.1
(22) Anmeldetag: 28.12.2017
(51) Int. Cl.: B60R 25/045, B62M 6/90, B60L 7/12, H04L 9/32, B60R 25/30

(54) **SICHERUNGSANORDNUNG UND -VERFAHREN FÜR ELEKTROFAHRRÄDER**
PROTECTION SYSTEM AND METHOD FOR ELECTRIC BICYCLES
DISPOSITIF ET SYSTÈME DE PROTECTION POUR VÉLO ÉLECTRIQUE

(30) Priorität: 06.01.2017 CH 182017
(43) Veröffentlichungstag der Anmeldung: 13.11.2019
(73) Patentinhaber: myStromer AG, 3173 Oberwangen b. Bern (CH)
(72) Erfinder: ISENSCHMID, Dominic, 3145 Niederscherli (CH); WIEDMER, Christophe, 3324 Hindelbank (CH); EGLI,Peter, 3053 Münchenbuchsee (CH)
(74) Vertreter: IPrime Rentsch Kaelin AG
(86) Internationale Anmeldenummer: PCT/EP2017/084727
(87) Internationale Veröffentlichungsnummer: WO 2018/127449

(56) Entgegenhaltungen:
- EP-A1- 0 827 884
- WO-A1-2013/006915
- WO-A1-2013/179208
- WO-A1-2015/197722
- DE-A1-102006 042 358
- GB-A- 2 298 300
- US-A1- 2011 270 480

## Beschreibung

Die vorliegende Erfindung betrifft eine elektronische Sicherungsanordnung mit einem zumindest teilweise elektrisch angetriebenen Fahrzeug, insbesondere Elektrofahrrad oder Elektromotorrad, gemäss unabhängigem Anspruch 1. Des Weiteren betrifft die Erfindung ein Verfahren zur Sicherung eines zumindest teilweise elektrisch angetriebenen Fahrzeugs oder dessen Komponenten, insbesondere Elektrofahrrad oder Elektromotorrad, gemäss unabhängigem Anspruch 12.

### Technologischer Hintergrund

Elektrisch angetriebene Fahrzeuge oder auch Leicht-Elektrofahrzeuge gemäss dem Stand der Technik beziehen ihre Antriebsenergie sowie Energie für Hilfsaggregate aus Energiespeichervorrichtungen, wie wieder aufladbaren Batterien bzw. Akkumulatoren, kurz "Akku" genannt. Insbesondere wenn die Fahrzeuge als Elektrofahrräder oder Elektromotorräder ausgestaltet sind, kann zusätzliche Antriebsenergie mithilfe eines vom Fahrer betätigten Pedalantriebs erzeugt werden. Die Akkumulatoren sind häufig austauschbar oder zumindest wiederlösbar am oder im Fahrzeug angebracht, damit sie vom Fahrzeug getrennt elektrisch aufgeladen oder zum Wechseln aus Wartungsgründen oder zum Ersatz durch einen geladenen Akkumulator möglichst einfach ausgetauscht werden können.

Derartige elektrisch angetriebene Fahrzeuge oder Teile davon, wie die Akkumulatoren, sind potenziell diebstahlgefährdet. Beispielsweise werden derzeit in der Schweiz jährlich ca. 40.000 Fahrräder gestohlen. Die Aufklärungsrate dieser Diebstähle liegt unter 3 %.

Beispielsweise befassen sich WO 2015/197722 A1, WO 2013/179208 A1 und US 2011/270480 A1 mit in Fahrzeugen und deren Batterien verwendeten Sicherungsschlüsseln oder Identifizierungscodes zur Vermeidung unbefugter Benutzung. GB 2 298 300 A beschreibt ein System zum Sichern von Batterien in Fahrzeugen, wobei elektronischer Code aus Fahrzeugschlüsseln abgefragt wird.

Insbesondere die Akkumulatoren haben als Teile der Fahrzeuge ein relativ hohes Diebstahlpotenzial, weil sie sehr wertvoll sind. Selbst wenn die Akkumulatoren gemäss dem Stand der Technik am oder im Fahrzeug mechanisch gesichert sind, beispielsweise durch Verriegelungen, Schlösser oder Ähnliches, sind derartige mechanische Sicherungen in der Regel mit einem gewissen Know-how, Geschick und Werkzeug in überschaubarer Zeit überwindbar und der Akkumulator somit entwendbar.

### Darstellung der Erfindung

Aufgabe der Erfindung ist es in Anbetracht der oben beschriebenen Diebstahlpotenziale, die Sicherung der Fahrzeuge und insbesondere der Energiespeichervorrichtungen bzw. Akkumulatoren gegen Diebstahl zu verbessern.

Diese und andere Aufgaben werden gelöst durch eine Sicherungsanordnung gemäss unabhängigem Anspruch 1 sowie ein Verfahren gemäss unabhängigem Anspruch 12.

Insbesondere werden die Nachteile aus dem Stand der Technik durch eine erfindungsgemässe Sicherungsanordnung mit einem zumindest teilweise elektrisch angetriebenen Fahrzeug überwunden, indem die Energiespeichervorrichtung ein elektronisches Energiespeichersicherungsmodul umfasst, in dem wenigstens ein elektronischer Energiespeichersicherungsschlüssel hinterlegt ist, wobei das Fahrzeug dazu ausgestaltet ist, den elektronischen Energiespeichersicherungsschlüssel auszulesen, wobei das Fahrzeug dazu ausgestaltet ist, den elektronischen Energiespeichersicherungsschlüssel auszulesen, wobei eine Verwaltungseinrichtung mit einem Registrierungsmodul, in dem das Fahrzeug mit einer Fahrzeugkennung und/oder die Energiespeichervorrichtung mit dem Energiespeichersicherungsschlüssel als gestohlen meldbar sind bzw. ist, und wobei das Fahrzeug und/oder die Energiespeichervorrichtung dazu ausgestaltet sind bzw. ist, in einen Alarmmodus zu gehen, wenn die Fahrzeugkennung und/oder der ausgelesene Energiespeichersicherungsschlüssel im Registrierungsmodul als gestohlen gemeldet sind bzw. ist.

Bei einem erfindungsgemässen Verfahren werden die Nachteile aus dem Stand der Technik überwunden, indem in einem Energiespeichersicherungsmodul der Energiespeichervorrichtung für das Fahrzeug ein elektronischer Energiespeichersicherungsschlüssel hinterlegt wird, der durch das Fahrzeug auslesbar ist, wobei das Fahrzeug mit einer Fahrzeugkennung und/oder die Energiespeichervorrichtung mit dem Energiespeichersicherungsschlüssel in einem Registrierungsmodul einer Verwaltungseinrichtung als gestohlen meldbar sind bzw. ist, und dass das Fahrzeug und/oder die Energiespeichervorrichtung in einen Alarmmodus gehen, wenn die Fahrzeugkennung und/oder der ausgelesene Energiespeichersicherungsschlüssel im Registrierungsmodul als gestohlen gemeldet sind bzw. ist.

Diese erfindungsgemässen Lösungen haben den Vorteil, dass die Energiespeichervorrichtung eindeutig identifiziert werden kann. Die Identifizierung kann dazu genutzt werden, um zu ermitteln, ob die Energiespeichervorrichtung ordnungsgemäss bzw. legitim eingesetzt wird oder sich im Besitz des rechtmässigen Eigentümers befindet. Im Umkehrschluss kann anhand der Identifizierung festgestellt werden, ob die Energiespeichervorrichtung sich in den Händen eines Unbefugten befindet, beispielsweise eines Finders, Diebes, Hehlers oder gutgläubigen Erwerbers von Diebesgut. Wenn die Energiespeichervorrichtung in den Händen eines Unbefugten ist, kann ein Alarm ausgelöst werden.

Beim erfindungsgemässen Verfahren wird entsprechend der Energiespeichersicherungsschlüssel von einem elektrisch angetriebenen Fahrzeug ausgelesen und überprüft, ob der ausgelesene Energiespeichersicherungsschlüssel in einer für den gemeinsamen Betrieb freigegebenen Paarung zusammen mit einem Fahrzeugsicherungsschlüssel und/oder einer Fahrzeugkennung des Fahrzeuges registriert ist. Entsprechend kann eine Energiespeicherkennung, wie beispielsweise eine Seriennummer der Energiespeichervorrichtung, zumindest einen Teil des Energiespeichersicherungsschlüssels bilden oder als solcher verwendet werden.

Somit kann das Fahrzeug samt Energiespeichervorrichtung Teil eines proprietären Fahrzeugsystems sein, dass mit Hilfe des Energiespeichersicherungsschlüssels ganz oder teilweise gegen Diebstahl und Missbrauch schützbar ist. Energiespeichervorrichtung und Fahrzeug lassen sich über den Energiespeichersicherungsschlüssel aufeinander abstimmen, um eine zum Betrieb freigegebene Paarung zu bilden.

Insbesondere für Leicht-Elektrofahrzeuge existieren standardisierte Systeme zur mechanischen sowie elektrischen Anbindung derer Komponenten. Ein bekanntes Standardsystem zur Datenübertragung zwischen den Komponenten ist der sogenannte "EnergyBus", über den Daten zwischen der Energiespeichervorrichtung und dem Fahrzeug übertragen werden können. Alternativ oder zusätzlich kann der Sicherungsschlüssel selbstverständlich auch durch andere Gerätschaften, wie beispielsweise Lade-und/oder Servicegeräte ausgelesen werden. Durch das Auslesen kann der Sicherungsschlüssel überprüft und abgeglichen werden.

Die erfindungsgemässe Lösung kann durch die folgenden weiteren, jeweils für sich vorteilhaften Ausführungsformen beliebig ergänzt und weiter verbessert werden, wobei ein Fachmann ohne Weiteres klar und eindeutig erkennen wird, dass Vorrichtungsmerkmale einer erfindungsgemässen Sicherungsanordnung analoge Schritte eines erfindungsgemässen Verfahrens darstellen und umgekehrt:
Gemäss einer weiteren Ausführungsform einer erfindungsgemässen Sicherungsanordnung umfasst die Energiespeichervorrichtung des Weiteren ein elektronisches Energiespeicheralarmmodul, das dazu ausgestaltet ist, die Energiespeichervorrichtung und/oder ein elektrisch angetriebenes Fahrzeug von einem Energiespeichernormalmodus in einen Energiespeicheralarmmodus zu versetzen, sobald die Energiespeichervorrichtung in bzw. zusammen mit einem elektrisch angetriebenen Fahrzeug verwendet wird, für das der Energiespeichersicherungsschlüssel nicht freigegeben ist. Alternativ oder zusätzlich kann selbstverständlich auch das Anschliessen einer als gestohlen oder vermisst gemeldeten Energiespeichervorrichtung an ein Lade- und/oder Servicegerät dazu führen, dass der Energiespeicheralarmmodus ausgelöst wird. Im Energiespeicheralarmmodus kann die Energiespeichervorrichtung beispielsweise den Betrieb verweigern oder nur einen eingeschränkten Betrieb zulassen.

Gemäss einer weiteren Ausführungsform umfasst das Fahrzeug ein Fahrzeugalarmmodul, das dazu ausgestaltet ist, das Fahrzeug von einem Fahrzeugnormalmodus in ein Fahrzeugalarmmodus zu versetzen, sobald der Energiespeichersicherungsschlüssel nicht für das Fahrzeug freigegeben ist. Im Fahrzeugalarmmodus kann das Fahrzeug einen Alarm auslösen und/oder kommunizieren. Somit lässt sich am Fahrzeug selber oder über dieses erkennen, ob eine gestohlene Energiespeichervorrichtung vorliegt.

Gemäss einer weiteren Ausführungsform sind bzw. ist die Energiespeichervorrichtung und/oder das Fahrzeug im oder vor dem Alarmmodus in einen eingeschränkten Betriebsmodus versetzt. Im eingeschränkten Betriebsmodus können Funktionen der Energiespeichervorrichtung und/oder des Fahrzeugs ganz oder teilweise abgeschaltet bzw. blockiert sein. So wäre beispielsweise denkbar, dass sich die Energiespeichervorrichtung im eingeschränkten Betriebsmodus zwar noch laden lässt, jedoch keine Energie mehr bereitstellt. Das Fahrzeug könnte im eingeschränkten Betriebsmodus beispielsweise zwar noch über einen Hilfsantrieb, wie Pedalantrieb, angetrieben werden, jedoch würde der elektrische Antrieb abgeschaltet oder zumindest zeit-, orts- und/oder leistungsabhängig begrenzt sein.

Gemäss einer weiteren Ausführungsform umfasst das Fahrzeug des Weiteren ein Signalmodul, das dazu ausgestaltet ist, mit dem Fahrzeugalarmmodul zusammenzuwirken und ein akustisches, optisches und/oder verborgenes Alarmsignal auszusenden, sobald der Energiespeichersicherungsschlüssel nicht für das Fahrzeug freigegeben ist. Durch derartige Alarmsignale können gestohlene Energiespeichervorrichtungen und/oder Fahrzeuge erkannt bzw. ausfindig gemacht werden. Auch können die Alarmsignale einen Finder, Dieb, Hehler oder unbefugten Erwerber von Energiespeichervorrichtung und/oder Fahrzeug auf den Diebstahl oder Verlust aufmerksam bzw. diesen so offensichtlich erkennbar machen, dass von einer unbefugten Weiterverwendung der Energiespeichervorrichtung und/oder des Fahrzeugs abgesehen und diese bestenfalls zu ihrem legitimen Eigentümer zurück überführt werden können.

Gemäss einer weiteren Ausführungsform umfasst das Fahrzeug ein Ortungsmodul, das dazu ausgestaltet ist, ein Ortungssignal auszulösen, sobald der Energiespeichersicherungsschlüssel nicht für das Fahrzeug freigegeben ist. Beispielsweise kann das Ortungsmodul mit einer Navigationseinrichtung des Fahrzeugs verbunden sein, wie beispielsweise einen GPS-Empfänger oder einem Empfänger eines anderen terrestrischen Navigationssystems. Des Weiteren kann das Ortungsmodul mit einer Kommunikations-, insbesondere Sendeeinrichtung verbunden sein, die beispielsweise einer Mobilfunkeinrichtung oder einem anderen Telekommunikationsmittel. Somit kann das Ortungsmodul ein Ortungssignal an eine beliebige Instanz melden, um gestohlene oder verlorengegangene Energiespeichervorrichtungen und/oder Fahrzeuge ausfindig zu machen.

Gemäss einer weiteren Ausführungsform umfasst das Fahrzeug ein Fahrzeugsicherungsmodul, in dem ein Fahrzeugsicherungsschlüssel und/oder eine Fahrzeugkennung zum Abgleich mit dem Energiespeichersicherungsschlüssel hinterlegt sind bzw. ist. Somit lassen sich legitime oder ordnungsgemässe Paarungen von Energiespeichersicherungsschlüsseln und Fahrzeugsicherungsschlüsseln und/oder Fahrzeugkennungen definieren sowie durch eine Kommunikation zwischen Energiespeichervorrichtung und Fahrzeug überprüfen. Im Umkehrschluss lassen sich illegale oder anderweitig unzulässige Paarungen von Energiespeichervorrichtungen und Fahrzeugen erkennen, um dementsprechende Schritte auszulösen.

Gemäss einer weiteren Ausführungsform umfasst eine erfindungsgemässe Sicherungsanordnung des Weiteren ein Registrierungsmodul, das dazu ausgestaltet ist, wenigstens eine für den gemeinsamen Betrieb freigegebene Paarung von wenigstens einem Energiespeichersicherungsschlüssel einerseits und wenigstens einem Fahrzeugsicherungsschlüssel und/oder einer Fahrzeugkennung andererseits zu registrieren. Das Registrierungsmodul kann auf Software-und/oder Hardwarebasis ausgeführt sein und entsprechende Software-und/oder Hardware-Sicherungsmechanismen beinhalten, um Unbefugten die Erzeugung von freigegebenen Paarungen nicht zuzulassen. Ein derartiges Registrierungsmodul kann kabellos und/oder kabelgebunden mit Energiespeichervorrichtungen, Fahrzeugen und/oder Bedien- bzw. Eingabegeräten, die Computern, Smartphones, Tablets oder ähnlichem kommunizieren, um Registrierungen vorzunehmen oder rückgängig zu machen. Über das Registrierungsmodul können Energiespeichersicherungsschlüssel und/oder Fahrzeugsicherungsschlüssel zwischen Komponenten und Instanzen einer erfindungsgemässen Sicherungsanordnung ausgetauscht sowie zur Registrierung kommuniziert und überprüft werden.

Gemäß einer weiteren Ausführungsform umfasst eine erfindungsgemäße Sicherungsanordnung ein Alarmdatenbankmodul, das dazu ausgestaltet ist, einen als gesperrt eingestuften Energiespeichersicherungsschlüssel zu registrieren. Alternativ oder zusätzlich kann im Alarmdatenbankmodul eine nicht für den gemeinsamen Betrieb freigegebene Paarung von wenigstens einem Energiespeichersicherungsschlüssel einerseits und wenigstens einem Fahrzeugsicherungsschlüssel und/oder einer Fahrzeugkennung andererseits zu registriert werden. Durch die Registrierung von gesperrten Energiespeichersicherungsschlüsseln und/oder nicht für den gemeinsamen Betrieb freigegebenen Paarungen können Alarmmodi und/oder eingeschränkte Betriebsmodi ausgelöst und verwaltet werden.

Gemäss einer weiteren Ausführungsform umfasst eine erfindungsgemässe Sicherungsanordnung eine benutzerseitige Verwaltungseinrichtung, die dazu ausgestaltet ist, wenigstens einen Energiespeichersicherungsschlüssel durch einen Benutzer der Energiespeichervorrichtung verwalten zu lassen. Das Registrierungsmodul kann Teil der Verwaltungseinrichtung sein und/oder mit dieser Zusammenwirken. Mit der Verwaltungseinrichtung können eine Vielzahl von Paarungen von Energiespeichersicherungsschlüsseln einerseits und Fahrzeugkennungen und/oder Fahrzeugsicherungsschlüsseln anderseits verwaltet werden. Dies kann insbesondere Benutzern von mehreren Fahrzeugen und/oder Energiespeichervorrichtungen helfen, diese zu verwalten bzw. eine Vielzahl von zum gemeinsamen Betrieb freigegebenen Paarungen, die somit freigegebene Gruppierungen von Paarungen von Energiespeichersicherungsschlüsseln einerseits und Fahrzeugkennungen und/oder Fahrzeugsicherungsschlüsseln anderseits bilden. Bei derartigen Benutzern kann es sich beispielsweise um Werkstätten, Verleiher oder Ähnliches handeln.

Gemäss einer weiteren Ausführungsform umfasst eine erfindungsgemässe Sicherungsanordnung eine anbieterseitige Verwaltungseinrichtung, die dazu ausgestaltet ist, wenigstens einen Energiespeichersicherungsschlüssel zu verwalten. Die anbieterseitige Verwaltungseinrichtung kann die Funktionen der benutzerseitigen Verwaltungseinrichtung sowie zusätzliche Funktionen und vor allem Berechtigungen zur Ausführung gewisser Aktionen bei der Verwaltung von zum gemeinsamen Betrieb freigegebenen Paarungen und Gruppierungen bereitstellen. Derartige Zusatzfunktionen können insbesondere Fahrzeugherstellern und Händlern zur Verfügung stehen. Diese können zur Verwaltung der Paarungen zwecks Vertrieb und/oder zum Kundenservice bzw. Support die anbieterseitige Verwaltungseinrichtung verwenden. Sowohl die benutzerseitige als auch die anbieterseitige Verwaltungseinrichtung können zusätzlich zur reinen Verwaltung freigegebener Paarungen oder Gruppierungen zur Anzeige und Verwaltung von Alarmsignalen sowie Ortungssignalen verwendet werden.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, wobei Merkmale, wie oben beschrieben, entsprechend jeweiliger Anforderungen beliebig miteinander kombiniert oder auch weggelassen werden können.

Es zeigen:
- Figur 1: eine schematische Seitenansicht eines Fahrzeuges in Form eines Elektrofahrrades als Teil einer erfindungsgemässen Sicherungsanordnung;
- Figur 2: ein Teilbereich des in Figur 1 gezeigten Fahrzeugs samt Energiespeichervorrichtung in einer Entnahmeposition;
- Figur 3: eine erfindungsgemässe Sicherungsanordnung; und
- Figur 4: ein Ablaufschema eines erfindungsgemässen Verfahrens.

### Ausführung der Erfindung

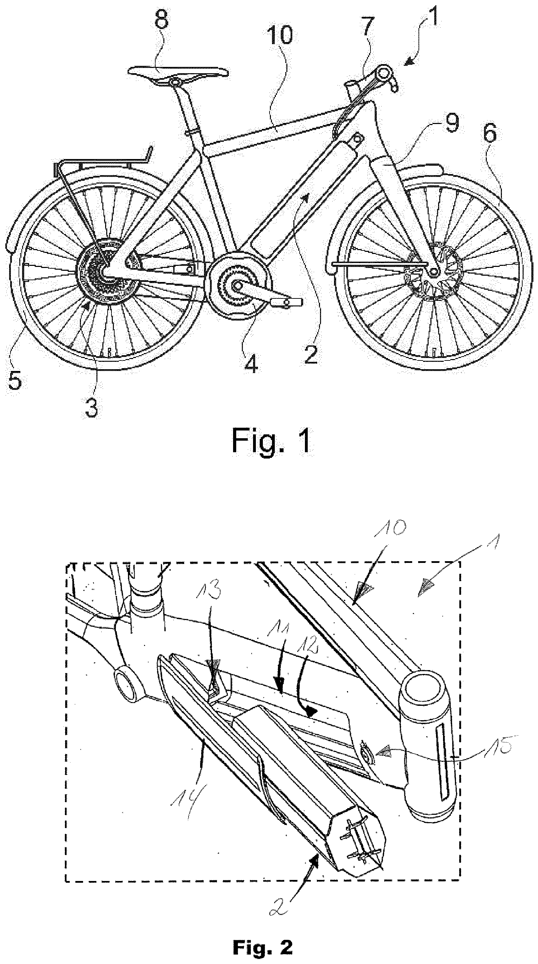

Figur 1 zeigt ein erfindungsgemässes Fahrzeug 1 mit einer erfindungsgemässen Energiespeichervorrichtung 2 in einer schematischen Seitenansicht. Das Fahrzeug 1 ist als elektrisches Fahrrad ausgestaltet und besitzt neben einem Elektroantrieb 3 einen Pedalantrieb 4, um ein als Antriebsrad verwendetes Hinterrad 5 anzutreiben. Des Weiteren besitzt das Fahrzeug 1 ein Vorderrad 6, einen Lenker 7 und einen Sattel 8 für einen Fahrer bzw. Benutzer (nicht gezeigt). Das Vorderrad 6 ist an einer Gabel 9 des Fahrzeugs 1 aufgenommen. Ein Rahmen 10 des Fahrzeugs 1 trägt die Energiespeichervorrichtung 2, den Elektroantrieb 3, den Pedalantrieb 4, das Hinterrad 5, den Lenker 7, den Sattel 8 und die Gabel 9.

Figur 2 zeigt einen Teilbereich des Fahrzeugs 1, insbesondere des Rahmens 10 in einer schematischen Perspektivansicht. Am Rahmen 10 ist eine Öffnung 11 ausgeformt, über die eine im Rahmen 10 angeordnete Aufnahme 12 für die Energiespeichervorrichtung 2 zugänglich ist. In der Aufnahme 12 ist ein Anschluss 13 für die Energiespeichervorrichtung 2 vorgesehen, der einen entsprechenden Gegenanschluss (nicht gezeigt) zum Anschliessen der Energiespeichervorrichtung 2 an das Fahrzeug 1 aufweist, um Energie und Daten zwischen Fahrzeug 1 und Energiespeichervorrichtung 2 hin- und her übertragen zu können.

Der Anschluss 13 und der gegen Anschluss sind in der Regel als Steckverbindungssystem beispielsweise nach einem Standard, wie dem des "EnergyBus", ausgestaltet. Um die somit vom Fahrzeug 1 trennbare Energiespeichervorrichtung 2 samt wenigstens einem dazugehörigen bzw. darin enthaltenen Energiespeicher, wie einem Akkumulator, einem Gas- oder Flüssigkeitsspeicher, einer Brennstoffzelle und/oder Ähnliches, mechanisch sowie gegen schädliche Umwelteinflüsse und Diebstahl am bzw. im Rahmen 10 sichern zu können, ist die Öffnung 11 mit einer Abdeckung 14 in Form einer Klappe versehen, die in einer geschlossenen Stellung mithilfe eines Schliessmechanismus 15, der beispielsweise durch einen mechanischen Schlüssel zu betätigen ist, sicherbar.

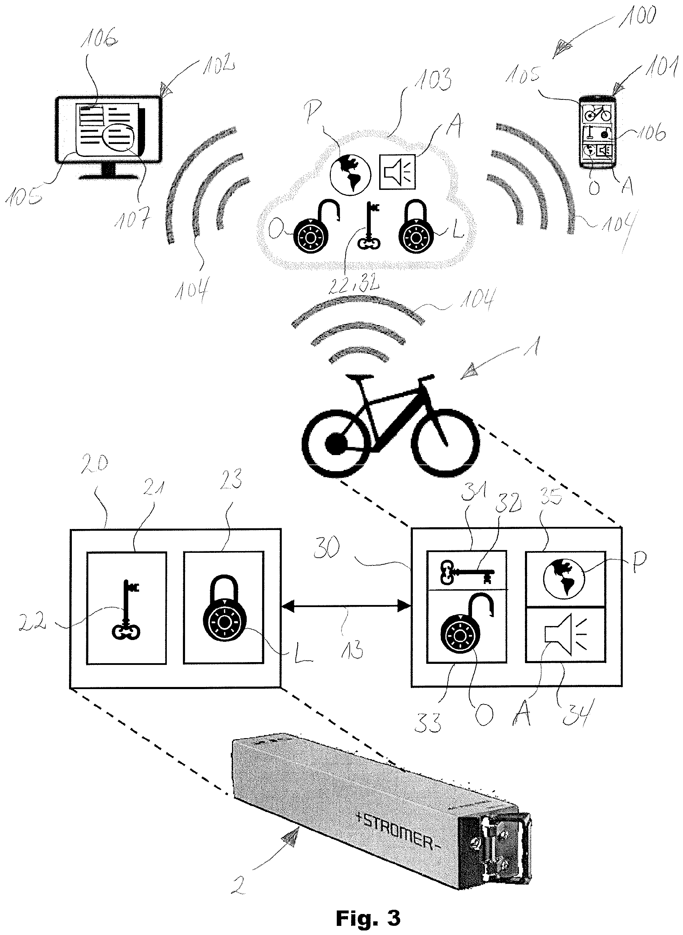

Wie in Figur 3 gezeigt, besitzt die Energiespeichervorrichtung 2 des Weiteren eine elektronische Energiespeichersteuerung 20. Die Energiespeichersteuerung 20 umfasst ein Energiespeichersicherungsmodul 21, in dem wenigstens ein Energiespeichersicherungsschlüssel 22 hinterlegt ist. Das Energiespeichersicherungsmodul 21 kann als Softund/oder Hardware in der Energiespeichersteuerung 20 implementiert sein und einen elektronische Speicher bzw. ein Register bereitstellen, um den Energiespeichersicherungsschlüssel 22 vorzugsweise nicht-flüchtig hinterlegen zu können. Der Energiespeichersicherungsschlüssel 22 kann aus einer beliebigen, den jeweiligen Anforderungen entsprechenden Anzahl und Reihenfolge verschiedener Zeichen bestehen, die über den Anschluss 13 aus der Energiespeichervorrichtung 2 ausgelesen und in die Energiespeichervorrichtung 2 hineingeschrieben werden können.

Die Energiespeichervorrichtung 2 besitzt zusätzlich ein Energiespeicheralarmmodul 23, das ebenfalls als Soft-und/oder Hardware in der Energiespeichersteuerung 20 implementiert sein und einen elektronische Speicher bzw. ein Register bereitstellen kann, um Informationen über einen Sicherungszustand sowie Alarmzustand der Energiespeichervorrichtung 2 vorzugsweise nicht-flüchtig hinterlegen zu können. Wie in Figur 3 gezeigt, befindet sich die Energiespeichervorrichtung 2 beispielsweise in einem im Energiespeicheralarmmodul 23 festgehaltenen gesperrten Zustand L, der bei oder vor der Verwendung der Energiespeichervorrichtung 2 zu entsperren ist, damit die Energiespeichervorrichtung 2 ordnungsgemäss verwendet werden kann.

Das Fahrzeug 1 besitz eine Fahrzeugsteuerung 30, die dazu ausgestaltet ist, über den Anschluss 13 mit der Energiespeichersteuerung 20 zusammenzuwirken, damit das Fahrzeug 1 und die Energiespeichervorrichtung 2 Energie und Daten miteinander austauschen können. Die Fahrzeugsteuerung 30 umfasst ein Fahrzeugsicherungsmodul 31, in dem wenigstens ein Fahrzeugsicherungsschlüssel bzw. eine Fahrzeugkennung 32 hinterlegt ist bzw. sind. Das Fahrzeugsicherungsmodul 31 kann als Soft-und/oder Hardware in der Fahrzeugsteuerung 30 implementiert sein und einen elektronische Speicher bzw. ein Register bereitstellen, um den Fahrzeugsicherungsschlüssel bzw. die Fahrzeugkennung 32 vorzugsweise nicht-flüchtig hinterlegen zu können. Der Fahrzeugsicherungsschüssel bzw. die Fahrzeugkennung 32 kann aus einer beliebigen, den jeweiligen Anforderungen entsprechenden Anzahl und Reihenfolge verschiedener Zeichen bestehen, die über den Anschluss 13 und/oder eine weitere Schnittstelle (nicht gezeigt) der Fahrzeugsteuerung 30 kabellos als Funksignale und/oder kabelgebunden aus dem Fahrzeug 1 ausgelesen und in das Fahrzeug 1 hineingeschrieben werden können.

Zusätzlich besitzt das Fahrzeug 1 ein Fahrzeugalarmmodul 33, das ebenfalls als Softund/oder Hardware in der Fahrzeugsteuerung 30 implementiert sein und einen elektronische Speicher bzw. ein Register bereitstellen kann, um Informationen über einen Sicherungszustand sowie Alarmzustand des Fahrzeugs 1 vorzugsweise nicht-flüchtig hinterlegen zu können. Wie in Figur 3 gezeigt, befindet sich das Fahrzeug 1 beispielsweise in einem im Fahrzeugalarmmodul 33 festgehaltenen entsperrten Zustand O, in dem das Fahrzeug1 ordnungsgemäss verwendet werden kann.

Des Weiteren besitzt das Fahrzeug 1 ein Signalmodul 34 und ein Ortungsmodul 35, die ebenfalls als Soft-und/oder Hardware in der Fahrzeugsteuerung 30 implementiert oder zumindest signal-und/oder Energieübertragend damit verbunden sein können. Das Signalmodul 34 ist dazu ausgestaltet, ein Alarmsignal A zu versenden und/oder zu empfangen. Das Ortungsmodul 35 ist dazu ausgestaltet, ein Ortungs- bzw. Positionssignal P zu versenden und/oder zu empfangen.

Somit bilden das Fahrzeug 1 und die Energiespeichervorrichtung 2 samt ihren jeweiligen Steuerungen 30 bzw. 20 einen Teil einer erfindungsgemässen Sicherungsanordnung 100, die beispielhaft schematisch in Figur 3 dargestellt ist. Die Sicherungsanordnung 100 umfasst eine benutzerseitige Verwaltungseinrichtung 101 und eine anbieterseitige Verwaltungseinrichtung 102, die mit über ein Netzwerk 103 hergestellten Kommunikationsverbindungen 104 miteinander kommunizieren, insbesondere Energiespeichersicherungsschlüssel 22, Fahrzeugsicherungsschlüssel bzw. Fahrzeugkennungen 32, Informationen zu gesperrten Zuständen L und entsperrten Zuständen O sowie Alarmsignale A und Ortungssignale P miteinander austauschen.

Die Verwaltungseinrichtungen 101, 102 können auf beliebigen den jeweiligen Anforderungen entsprechenden elektronischen Geräten, wie Computern, Smartphones, Handhelds, Tabletts samt entsprechender Peripheriegeräte usw., als Hardware-und/oder Software implementiert sein und jeweils ein Steuerungsmodul 105 sowie entsprechende Einrichtungen zum Aufbau der Kommunikationsverbindungen 104 umfassen, um über das Netzwerk 103 auf die Energiespeichersteuerung 20 und die Fahrzeugsteuerung 30 zugreifen zu können. Bei den Kommunikationsverbindungen 104 kann es sich um kabellose und/oder kabelgebundene, digitale und/oder analoge Verbindungen beliebiger Art, wie beispielsweise WiFi, Funkverbindungen, Internet- und/oder Ethernet-Verbindungen, "EnergyBus" oder Ähnliches sowie elektronische Speichereinrichtungen handeln, die den jeweiligen technischen und Sicherheitsanforderungen genügen, um ein erfindungsgemässes Netzwerk 103 auszubilden. Dazu weisen die Verwaltungseinrichtungen 101,102 entsprechende Ein-und Ausgabegeräte auf, um Informationen zu gesperrten Zuständen L und entsperrten Zuständen O sowie Alarmsignale A und Ortungssignale P anzuzeigen, auszugeben und/oder zu bearbeiten bzw. ändern.

Das Steuerungsmodul 105 kann jeweils ein Registrierungsmodul 106 umfassen, um wenigstens eine für den gemeinsamen Betrieb freigegebene Paarung eines Energiespeichersicherungsschlüssels 22 einerseits und eines Fahrzeugsicherungsschlüssels bzw. einer Fahrzeugkennung 32 anzuzeigen, definieren und/oder zu bearbeiten. Insbesondere die anbieterseitige Verwaltungseinrichtung 102 kann über die benutzerseitige Verwaltungseinrichtung 101 hinausgehende Funktionen und/oder Berechtigungen beinhalten. So kann die anbieterseitige Verwaltungseinrichtung 102 beispielsweise ein Alarmdatenbankmodul 107 umfassen, um nicht für den gemeinsamen Betrieb freigegebene Paarungen von Energiespeichersicherungsschlüsseln 22 einerseits und eines Fahrzeugsicherungsschlüsseln bzw. einer Fahrzeugkennungen 32 anzuzeigen, definieren und/oder zu bearbeiten.

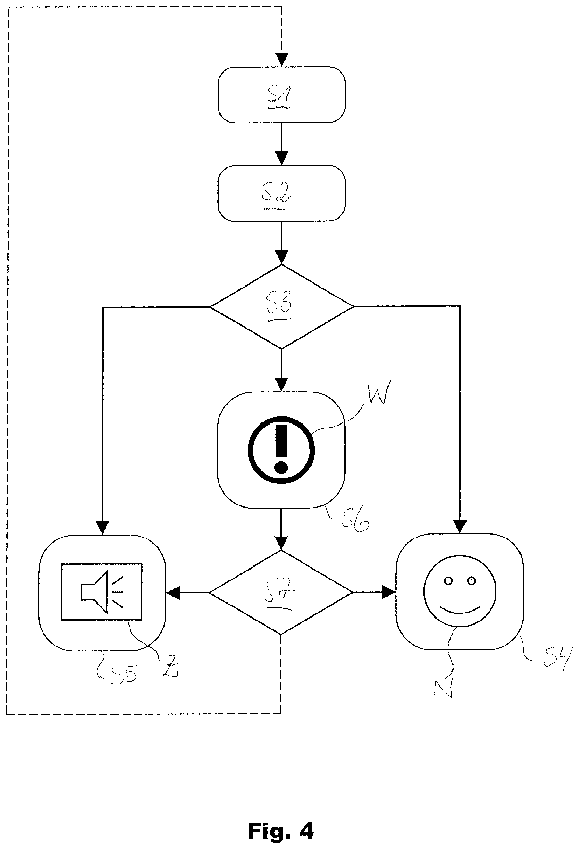

Figur 4 zeigt ein erfindungsgemässes Verfahrensschema, wie es in einer erfindungsgemässen Sicherungsanordnung 100 zur Anwendung kommen kann. So kann in einem ersten Schritt S1 eines erfindungsgemässen Verfahrens der Energiespeichersicherungsschlüssel 22 im Energiespeichersicherungsmodul 21 hinterlegt werden. In einem zweiten Schritt S2 wird der Energiespeichersicherungsschlüssel 22 ausgelesen, beispielsweise durch die Fahrzeugsteuerung 30. In einem dritten Schritt S3 wird überprüft, ob der ausgelesene Energiespeichersicherungsschlüssel 22 in einer für den gemeinsamen Betrieb freigegebenen Paarung zusammen mit einem Fahrzeugsicherungsschlüssel und/oder eine Fahrzeugkennung 32 des Fahrzeugs 1 registriert ist, mit dem die Energiespeichervorrichtung 2 verbunden ist. Die Überprüfung wird vom Akkusicherungsmodul 21, vom Fahrzeugsicherungsmodul 31, in der benutzerseitigen Verwaltungseinrichtung 101 und/oder anbieterseitigen Verwaltungseinrichtung 102 vorgenommen.

Falls es sich um eine ordnungsgemässe Paarung handelt, gehen Fahrzeug 1 und Energiespeichervorrichtung 2 in einem vierten Schritt S4 in einen normalen Betriebsmodus N, in dem sich beispielsweise sowohl Fahrzeug 1 als auch Energiespeichervorrichtung 2 in einem entsperrten Zustand O befinden. Sollte es sich um eine nicht ordnungsgemässe Paarung handeln, beispielsweise weil die Paarung nicht registriert ist oder weil Fahrzeug 1 und/oder Energiespeichervorrichtung 2 im Registrierungsmodul 106 als gestohlen oder vermisst gemeldet sind bzw. ist, so gehen Fahrzeug 1 und/oder Energiespeichervorrichtung 2 in einem fünften Schritt S5 in einen Alarmmodus Z, in welchem Fahrzeug1 und/oder Energiespeichervorrichtung 2 in den gesperrten Zustand L überführt, Alarmsignale A ausgesendet, Ortungssignale O ausgesendet und/oder derartige Informationen im Alarmdatenbankmodul 107 registriert werden können.

Alternativ oder zusätzlich können Fahrzeug 1 und/oder Energiespeichervorrichtung 2 in einem sechsten Schritt S6 in einen eingeschränkten Betriebsmodus oder Warnmodus W gehen, in dem sie eingeschränkt betriebsfähig sind. Im eingeschränkten Betriebsmodus W können Funktionen von Fahrzeug 1 und/oder Energiespeichervorrichtung 2 beispielsweise in zeitlich, örtlich und/oder leistungsmässig eingeschränktem Umfang zur Verfügung stehen. Um den eingeschränkten Betriebsmodus W zu beenden kann beispielsweise nach einer gewissen Zeit oder in Abhängigkeit von gewissen räumlichen Bedingungen in einem siebenten Schritt S7 bestätigend entschieden werden, ob eine entsprechende Paarung nicht freigegeben ist, freigegeben ist, oder noch freigegeben werden muss.

Wenn die Paarung freigegeben ist, wird aus dem siebenten Schritt S7 heraus der Normalbetriebsmodus N ausgelöst. Wenn die Paarung nicht freigegeben ist, wird aus dem siebenten Schritt S7 heraus der Alarmmodus Z ausgelöst. Andernfalls kann aus dem siebenten Schritt S7 heraus zu Bestätigung wieder zu Schritt S1 übergegangen werden.

Im Rahmen des Erfindungsgedankens sind Abweichungen von den oben beschriebenen Ausführungsbeispielen möglich. So kann das Fahrzeug 1 eine beliebige Art elektrisch angetriebenes Fahrzeug sein und eine den jeweiligen Anforderungen entsprechende Anzahl von Energiespeichervorrichtungen 2, Elektroantrieben 3, Pedalantrieben 4, Hinterrädern 5, Vorderrädern 6, Lenkern 7, Sätteln 8, Gabeln 9, Rahmen 10, Öffnungen 11, Aufnahmen 12, Anschlüssen 13, Abdeckungen 14 und/oder Schliessmechanismen 15 aufweisen, die die jeweiligen Anforderungen gemäss ausgestaltet und angeordnet sein können, um erfindungsgemäss zusammenzuwirken.

Die Energiespeichervorrichtung 2 kann eine Energiespeichersteuerung 20, ein Energiespeichersicherungsmodul 21 und/oder ein Energiespeicheralarmmodul 23 sowie das Fahrzeug 1 eine Fahrzeugsteuerung 30, ein Fahrzeugsicherungsmodul 31, ein Fahrzeugalarmmodul 33, Signalmodul 34 und/oder Ortungsmodul 35 in den jeweiligen Anforderungen entsprechender Ausgestaltung, Anordnung und Verknüpfung untereinander beinhalten, um in einer erfindungsgemässen Sicherungsanordnung 100 zusammenzuwirken.

Die Sicherungsanordnung 100 kann eine beliebige Anzahl von Fahrzeugen 1, Energiespeichervorrichtungen 2 Verwaltungseinrichtungen 101, 102, Netzwerken 103, Kommunikationsverbindungen 104, Steuerungsmodulen 105, Registrierungsmodulen 106 und/oder Alarmdatenbankmodulen 107 umfassen, die den jeweiligen Anforderungen gemäss ausgestaltet sein und zusammenwirken können, um erfindungsgemäss Informationen, wie Alarmsignale A, gesperrte Zustände L, entsperrte Zustände O und/oder Ortungssignale P auszutauschen bzw. anzuzeigen und im Rahmen eines erfindungsgemässen Verfahrens wenigstens einen der Verfahrensschritte S1 bis S7 auszuführen sowie entsprechend eine beliebige Anzahl von Fahrzeugen 1 und/oder Energiespeichervorrichtungen 2 den jeweiligen Anforderungen gemäss in normale Betriebsmodi N, eingeschränkte Betriebsmodi W und/oder Alarmmodi Z zu versetzen.

### Bezugszeichenliste

| | | | |
|---|---|---|---|
| 1 | Fahrzeug | 35 | Ortungsmodul |
| 2 | Energiespeichervorrichtung | | |
| 3 | Elektroantrieb | 100 | Sicherungsanordnung |
| 4 | Pedalantrieb | 101 | benutzerseitige Verwaltungsein-richtung |
| 5 | Hinterrad | | |
| 6 | Vorderrad | 102 | anbieterseitige Verwaltungsein-richtung |
| 7 | Lenker | | |
| 8 | Sattel | 103 | Netzwerk |
| 9 | Gabel | 104 | Kommunikationsverbindung |
| 10 | Rahmen | 105 | Steuerungsmodul |
| 11 | Öffnung | 106 | Registrierungsmodul |
| 12 | Aufnahme | 107 | Alarmdatenbankmodul |
| 13 | Anschluss | | |
| 14 | Abdeckung | A | Alarmsignal |
| 15 | Schliessmechanismus | L | gesperrter Zustand |
| | | O | entsperrter Zustand |
| 20 | Energiespeichersteuerung | P | Ortungssignal |
| 21 | Energiespeichersicherungsmodul | N | normaler Betriebsmodus |
| 22 | Energiespeichersicherungs-schlüssel | W | eingeschränkter Betriebsmodus |
| | | Z | Alarmmodus |
| 23 | Energiespeicheralarmmodul | | |
| | | | |
| 30 | Fahrzeugsteuerung | | |
| 31 | Fahrzeugsicherungsmodul | | |
| 32 | Fahrzeugsicherungsschlüssel | | |
| 33 | Fahrzeugalarmmodul | | |
| 34 | Signalmodul | | |

## Patentansprüche

1. Sicherungsanordnung (100) mit einem zumindest teilweise elektrisch angetriebenen Fahrzeug (1), insbesondere Elektrofahrrad oder Elektromotorrad, und mit einer Energiespeichervorrichtung (2), die ein elektronisches Energiespeichersicherungsmodul (21) umfasst, in dem wenigstens ein elektronischer Energiespeichersicherungsschlüssel (22) hinterlegt ist, wobei das Fahrzeug (1) dazu ausgestaltet ist, den elektronischen Energiespeichersicherungsschlüssel (22) auszulesen, **gekennzeichnet durch** eine Verwaltungseinrichtung (101, 102) mit einem Registrierungsmodul (106), in dem das Fahrzeug (1) mit einer Fahrzeugkennung (32) und/oder die Energiespeichervorrichtung (2) mit dem Energiespeichersicherungsschlüssel (22) als gestohlen meldbar sind bzw. ist, wobei das Fahrzeug (1) und/oder die Energiespeichervorrichtung (2) dazu ausgestaltet sind bzw. ist, in einen Alarmmodus (Z) zu gehen, wenn die Fahrzeugkennung (32) und/oder der ausgelesene Energiespeichersicherungsschlüssel (22) im Registrierungsmodul (106) als gestohlen gemeldet sind bzw. ist.

2. Sicherungsanordnung (100) nach Anspruch 1, **dadurch gekennzeichnet, dass** die Energiespeichervorrichtung (2) des Weiteren ein elektronisches Energiespeicheralarmmodul (23) umfasst, das dazu ausgestaltet ist, die Energiespeichervorrichtung (2) und/oder ein Fahrzeug (1) von einem Normalmodus (N) in den Alarmmodus (Z) zu versetzen, sobald die Energiespeichervorrichtung (2) in bzw. mit einem Fahrzeug (1) verwendet wird, für das der Energiespeichersicherungsschlüssel (22) nicht freigegeben ist.

3. Sicherungsanordnung (100) nach Anspruch 1 oder 2, **dadurch gekennzeichnet, dass** das Fahrzeug (1) ein Fahrzeugalarmmodul (33) umfasst, das dazu ausgestaltet ist, das Fahrzeug von einem Normalmodus (N) in den Alarmmodus (Z) zu versetzen, sobald der Energiespeichersicherungsschlüssel (22) nicht für das Fahrzeug (1) freigegeben ist.

4. Sicherungsanordnung (100) nach nach wenigstens einem der Ansprüche 1 bis 3, **dadurch gekennzeichnet, dass** die Energiespeichervorrichtung (2) und/oder das Fahrzeug (1) im oder vor dem Alarmmodus (Z) in einen eingeschränkten Betriebsmodus (W) versetzt sind bzw. ist.

5. Sicherungsanordnung (100) nach Anspruch 3, **dadurch gekennzeichnet, dass** das Fahrzeug (1) des Weiteren ein Signalmodul (34) umfasst, das dazu ausgestaltet ist, mit dem Fahrzeugalarmmodul (33) zusammenzuwirken und ein akustisches, optisches und/oder verborgenes Alarmsignal (A) auszusenden, sobald der Energiespeichersicherungsschlüssel (22) nicht für das Fahrzeug (1) freigegeben ist.

6. Sicherungsanordnung (100) nach wenigstens einem der Ansprüche 1 bis 5, **dadurch gekennzeichnet, dass** das Fahrzeug (1) ein Ortungsmodul (35) umfasst, das dazu ausgestaltet ist, ein Ortungssignal (P) auszulösen, sobald der Energiespeichersicherungsschlüssel (22) nicht für das Fahrzeug (1) freigegeben ist.

7. Sicherungsanordnung (100) nach wenigstens einem der Ansprüche 1 bis 6, **dadurch gekennzeichnet, dass** das Fahrzeug (1) ein Fahrzeugsicherungsmodul (31) umfasst, in dem ein Fahrzeugsicherungsschlüssel und/oder eine Fahrzeugkennung (32) zum Abgleich mit dem Energiespeichersicherungsschlüssel (22) hinterlegt sind bzw. ist.

8. Sicherungsanordnung (100) nach wenigstens einem der Ansprüche 1 bis 7, **dadurch gekennzeichnet, dass** das Registrierungsmodul (106) dazu ausgestaltet ist, wenigstens eine für den gemeinsamen Betrieb freigegebene Paarung von wenigstens einem Energiespeichersicherungsschlüssel (22) einerseits und wenigstens einem Fahrzeugsicherungsschlüssel und/oder einer Fahrzeugkennung (32) andererseits zu registrieren.

9. Sicherungsanordnung (100) nach Anspruch 7 oder 8, **gekennzeichnet durch** ein Alarmdatenbankmodul (107), das dazu ausgestaltet ist, einen als gesperrt eingestuften Energiespeichersicherungsschlüssel (22) zu registrieren.

10. Sicherungsanordnung (100) nach wenigstens einem der Ansprüche 1 bis 9, **gekennzeichnet durch** eine benutzerseitiges Verwaltungseinrichtung (101), die dazu ausgestaltet ist, wenigstens einen Energiespeichersicherungsschlüssel (22) durch einen Benutzer der Energiespeichervorrichtung (2) verwalten zu lassen.

11. Sicherungsanordnung (100) nach wenigstens einem der Ansprüche 1 bis 10, **gekennzeichnet durch** eine anbieterseitige Verwaltungseinrichtung (102), die dazu ausgestaltet ist, wenigstens einen Energiespeichersicherungsschlüssel (22) zu verwalten.

12. Verfahren zur Sicherung eines zumindest teilweise elektrisch angetriebenen Fahrzeugs (1) oder dessen Komponenten, insbesondere Elektrofahrrad oder Elektromotorrad, wobei in einem Energiespeichersicherungsmodul (21) einer Energiespeichervorrichtung (2) für das Fahrzeug (1) ein elektronischer Energiespeichersicherungsschlüssel (22) hinterlegt wird, der durch das Fahrzeug (1) auslesbar ist, **dadurch gekennzeichnet, dass** das Fahrzeug (1) mit einer Fahrzeugkennung (32) und/oder die Energiespeichervorrichtung (2) mit dem Energiespeichersicherungsschlüssel (22) in einem Registrierungsmodul (106) einer Verwaltungseinrichtung (101, 102) als gestohlen meldbar sind bzw. ist, und dass das Fahrzeug (1) und/oder die Energiespeichervorrichtung (2) in einen Alarmmodus (Z) gehen, wenn die Fahrzeugkennung (32) und/oder der ausgelesene Energiespeichersicherungsschlüssel (22) im Registrierungsmodul (106) als gestohlen gemeldet sind bzw. ist.

13. Verfahren nach Anspruch 12, **dadurch gekennzeichnet, dass** der Energiespeichersicherungsschlüssel (22) von einem elektrisch angetriebenen Fahrzeug (1) ausgelesen und überprüft wird, ob der ausgelesene Energiespeichersicherungsschlüssel (22) in einer für den gemeinsamen Betrieb freigegebenen Paarung zusammen mit einem Fahrzeugsicherungsschlüssel und/oder einer Fahrzeugkennung (32) des Fahrzeuges (1) registriert ist.

14. Verfahren nach Anspruch 12 oder 13, **dadurch gekennzeichnet, dass** die Energiespeichervorrichtung (2) und/oder das Fahrzeug (1) im oder vor dem Alarmmodus (Z) in einen eingeschränkten Betriebsmodus (W) versetzt werden bzw. wird.

15. Verfahren nach wenigstens einem der Ansprüche 12 bis 14, **dadurch gekennzeichnet, dass** wenigstens ein Energiespeichersicherungsschlüssel (22) in einer anbieterseitigen Verwaltungseinrichtung (102) verwaltet wird.

## Claims

1. A security arrangement (100) comprising an at least partially electrically driven vehicle (1), in particular an electric bicycle or electric motorcycle, and comprising an energy storage device (2) which comprises an electronic energy storage security module (21) in which at least one electronic energy storage security key (22) is stored, the vehicle (1) being designed to read out the electronic energy storage security key (22), **characterized by** a management means (101, 102) having a registration module (106) in which the vehicle (1) with a vehicle identification (32) and/or the energy storage device (2) with the energy storage security key (22) is or are reportable as stolen, the vehicle (1) and/or the energy storage device (2) being designed to enter an alarm mode (Z) when the vehicle identification (32) and/or the read-out energy storage security key (22) is or are reported as stolen in the registration module (106).

2. The security arrangement (100) according to claim 1, **characterized in that** the energy storage device (2) further comprises an electronic energy storage alarm module (23) which is designed to switch the energy storage device (2) and/or a vehicle (1) from a normal mode (N) into the alarm mode (Z) as soon as the energy storage device (2) is used in or with a vehicle (1) for which the energy storage security key (22) is not approved.

3. The security arrangement (100) according to claim 1 or claim 2, **characterized in that** the vehicle (1) comprises a vehicle alarm module (33) which is designed to switch the vehicle from a normal mode (N) into the alarm mode (Z) as soon as the energy storage security key (22) is not approved for the vehicle (1).

4. The security arrangement (100) according to at least one of claims 1 to 3, **characterized in that** the energy storage device (2) and/or the vehicle (1) is or are switched into a restricted operating mode (W) in or before the alarm mode (Z).

5. The security arrangement (100) according to claim 3, **characterized in that** the vehicle (1) further comprises a signal module (34) which is designed to interact with the vehicle alarm module (33) and to transmit an acoustic, visual and/or hidden alarm signal (A) as soon as the energy storage security key (22) is not approved for the vehicle (1).

6. The security arrangement (100) according to at least one of claims 1 to 5, **characterized in that** the vehicle (1) comprises a locating module (35) which is designed to trigger a locating signal (P) as soon as the energy storage security key (22) is not approved for the vehicle (1).

7. The security arrangement (100) according to at least one of claims 1 to 6, **characterized in that** the vehicle (1) comprises a vehicle security module (31) in which a vehicle security key and/or a vehicle identification (32) is or are stored for comparison with the energy storage security key (22).

8. The security arrangement (100) according to at least one of claims 1 to 7, **characterized in that** the registration module (106) is designed to register at least one pairing of at least one energy storage key (22) that is approved for joint operation on the one hand and at least one vehicle security key and/or a vehicle identification (32) that is approved for joint operation on the other hand.

9. The security arrangement (100) according to either claim 7 or claim 8, **characterized by** an alarm database module (107) which is designed to register an energy storage security key (22) classified as blocked.

10. The security arrangement (100) according to at least one of claims 1 to 9, **characterized by** a user-side management means (101) which is designed to allow a user of the energy storage device (2) to manage at least one energy storage security key (22).

11. The security arrangement (100) according to at least one of claims 1 to 10, **characterized by** a provider-side management means (102) which is designed to manage at least one energy storage security key (22).

12. A method for securing an at least partially electrically powered vehicle (1) or the components thereof, in particular an electric bicycle or electric motorcycle, an electronic energy storage security key (22) being stored in an energy storage security module (21) of an energy storage device (2) for the vehicle (1), which energy storage security key can be read out by the vehicle (1), **characterized in that** the vehicle (1) with a vehicle identification (32) and/or the energy storage device (2) with the energy storage security key (22) in a registration module (106) of a management means (101, 102) is or are reportable as stolen, and **in that** the vehicle (1) and/or the energy storage device (2) enter an alarm mode (Z) when the vehicle identification (32) and/or the read-out energy storage security key (22) is or are reported as stolen in the registration module (106).

13. The method according to claim 12, **characterized in that** the energy storage security key (22) is read out by an electrically powered vehicle (1) and it is checked whether the read-out energy storage security key (22) is registered in a pairing, approved for joint operation, together with a vehicle security key and/or a vehicle identification (32) of the vehicle (1).

14. The method according to either claim 12 or claim 13, **characterized in that** the energy storage device (2) and/or the vehicle (1) is or are switched into a restricted operating mode (W) in or before the alarm mode (Z).

15. The method according to at least one of claims 12 to 14, **characterized in that** at least one energy storage security key (22) is managed in a provider-side management means (102).

## Revendications

1. Système de sécurité (100) comportant un véhicule (1) à entraînement au moins partiellement électrique, en particulier une bicyclette électrique ou une moto électrique, et comportant un dispositif accumulateur d'énergie (2), lequel comprend un module de sécurité d'accumulateur d'énergie (21) électronique dans lequel au moins une clé à de sécurité d'accumulateur d'énergie (22) électronique est mémorisée, dans lequel le véhicule (1) est conçu pour lire la clé de sécurité d'accumulateur d'énergie (22) électronique, **caractérisé par** un agencement de gestion (101, 102) comportant un module d'enregistrement (106) dans lequel le véhicule (1), au moyen d'un identifiant de véhicule (32) et/ou le dispositif accumulateur d'énergie (2) au moyen de la clé de sécurité d'accumulateur d'énergie (22) peuvent être signalés comme volés, dans lequel le véhicule (1) et/ou le dispositif d'accumulateur d'énergie (2) sont conçus pour passer à un mode d'alarme (Z) lorsque l'identifiant de véhicule (32) et/ou la clé de sécurité d'accumulateur d'énergie (22) lue sont signalés comme volés dans le module d'enregistrement (106).

2. Système de sécurité (100) selon la revendication 1, **caractérisé en ce que** le dispositif d'accumulateur d'énergie (2) comprend en outre un module d'alarme d'accumulateur d'énergie (23) électronique, lequel est conçu pour faire passer le dispositif d'accumulateur d'énergie (2) et/ou un véhicule (1) d'un mode normal (N) au mode d'alarme (Z) dès que le dispositif accumulateur d'énergie (2) est utilisé dans ou avec un véhicule (1) pour lequel la clé de sécurité d'accumulateur d'énergie (22) n'est pas libérée.

3. Système de sécurité (100) selon la revendication 1 ou 2, **caractérisé en ce que** le véhicule (1) comprend un module d'alarme de véhicule (33), lequel est conçu pour faire passer le véhicule d'un mode normal (N) au mode d'alarme (Z) dès que la clé de sécurité d'accumulateur d'énergie (22) n'est pas libérée pour le véhicule (1).

4. Système de sécurité (100) selon au moins l'une quelconque des revendications 1 à 3, **caractérisé en ce que** le dispositif accumulateur d'énergie (2) et/ou le véhicule (1) sont faits passer dans un mode de fonctionnement (W) restreint dans ou avant le mode d'alarme (Z).

5. Système de sécurité (100) selon la revendication 3, **caractérisé en ce que** le véhicule (1) comprend en outre un module de signalisation (34), lequel est conçu pour interagir avec le module d'alarme de véhicule (33) et pour émettre un signal d'alarme acoustique, visuel et/ou caché (A) dès que la clé de sécurité d'accumulateur d'énergie (22) n'est pas libérée pour le véhicule (1).

6. Système de sécurité (100) selon au moins l'une quelconque des revendications 1 à 5, **caractérisé en ce que** le véhicule (1) comprend un module de localisation (35), lequel est conçu pour déclencher un signal de localisation (P) dès que la clé de sécurité d'accumulateur d'énergie (22) n'est pas libérée pour le véhicule (1).

7. Système de sécurité (100) selon au moins l'une quelconque des revendications 1 à 6, **caractérisé en ce que** le véhicule (1) comprend un module de sécurité de véhicule (31) dans lequel une clé de sécurité de véhicule et/ou un identifiant de véhicule (32) sont mémorisés pour une comparaison avec la clé de sécurité d'accumulateur d'énergie (22).

8. Système de sécurité (100) selon au moins l'une quelconque des revendications 1 à 7, **caractérisé en ce que** le module d'enregistrement (106) est conçu pour enregistrer au moins un appariement libéré, en vue du fonctionnement commun, d'au moins une clé de sécurité d'accumulateur d'énergie (22) d'une part et d'au moins une clé de sécurité de véhicule et/ou d'un identifiant de véhicule (32) d'autre part.

9. Système de sécurité (100) selon la revendication 7 ou 8, **caractérisé par** un module de banque de données d'alarme (107), lequel est conçu pour enregistrer une clé de sécurité d'accumulateur d'énergie (22) classée comme bloquée.

10. Système de sécurité (100) selon au moins l'une quelconque des revendications 1 à 9, **caractérisé par** un moyen de gestion (101) côté utilisateur, lequel est conçu pour permettre à un utilisateur du dispositif accumulateur d'énergie (2) de gérer au moins une clé de sécurité d'accumulateur d'énergie (22).

11. Système de sécurité (100) selon au moins l'une quelconque des revendications 1 à 10, **caractérisé par** un moyen de gestion (102) côté fournisseur, lequel est conçu pour gérer au moins une clé de sécurité d'accumulateur d'énergie (22).

12. Procédé de sécurité d'un véhicule (1) à entraînement au moins partiellement électrique ou de ses composants, en particulier d'une bicyclette électrique ou d'une moto électrique, dans lequel une clé de sécurité d'accumulateur d'énergie (22) électronique est mémorisée dans un module de sécurité d'accumulateur d'énergie (21) d'un dispositif accumulateur d'énergie (2) pour le véhicule (1), laquelle peut être lue par le véhicule (1), **caractérisé en ce que** le véhicule (1), au moyen d'un identifiant de véhicule (32) et/ou le dispositif accumulateur d'énergie (2), au moyen de la clé de sécurité d'accumulateur d'énergie (22) dans un module d'enregistrement (106) d'un moyen de gestion (101, 102) peuvent être signalés comme volés, et que le véhicule (1) et/ou le dispositif accumulateur d'énergie (2) entrent dans un mode d'alarme (Z) lorsque l'identifiant de véhicule (32) et/ou la clé de sécurité d'accumulateur d'énergie (22) lue sont signalés comme volés dans le module d'enregistrement (106).

13. Procédé selon la revendication 12, **caractérisé en ce que** la clé de sécurité d'accumulateur d'énergie (22) est lue par un véhicule (1) à entraînement électrique et qu'il est vérifié si la clé de sécurité d'accumulateur d'énergie lue (22) est enregistrée conjointement avec la clé de sécurité de véhicule et/ou un identifiant de véhicule (32) du véhicule (1) dans un appariement libéré pour le fonctionnement commun.

14. Procédé selon la revendication 12 ou 13, **caractérisé en ce que** le dispositif accumulateur d'énergie (2) et/ou le véhicule (1) sont ou seront faits passer dans un mode de fonctionnement restreint (W) dans ou avant le mode d'alarme (Z).

15. Procédé selon au moins l'une quelconque des revendications 12 à 14, **caractérisé en ce qu'**au moins une clé de sécurité d'accumulateur d'énergie (22) est gérée dans un moyen de gestion (102) côté fournisseur.
